Europäisches Patentamt

European Patent Office

Office européen des brevets

(19)

(11) Numéro de publication : **0 316 034 B1**

## (12) FASCICULE DE BREVET EUROPEEN

(45) Date de publication du fascicule du brevet :
08.05.91 Bulletin 91/19

(21) Numéro de dépôt : **88202430.0**

(22) Date de dépôt : **01.11.88**

(51) Int. Cl.⁵ : **C02F 1/66**

(54) Procédé pour la neutralisation d'une nappe d'eau acide sur un sédiment comprenant une substance humique.

(30) Priorité : **12.11.87 FR 8715760**

(43) Date de publication de la demande :
**17.05.89 Bulletin 89/20**

(45) Mention de la délivrance du brevet :
**08.05.91 Bulletin 91/19**

(84) Etats contractants désignés :
**AT BE CH DE ES FR GB GR IT LI LU NL SE**

(56) Documents cités :
**EP-A- 0 107 204**

(56) Documents cités :
**HYDROBIOLOGIA, vol. 92, 1982, pages
537-547, DR. W. Junk Publishers, La Haye, NL;
G.K. LINDMARK: "Acidified lakes: sediment
treatment with sodium carbonate - a remedy?"
OPD-THE CHEMICAL MARKETING NEWSPA-
PER, 5 avril 1971, pages 5,41; "Soda ash helps
sweeten up the Susquehanna river"**

(73) Titulaire : **SOLVAY & Cie (Société Anonyme)
Rue du Prince Albert, 33
B-1050 Bruxelles (BE)**

(72) Inventeur : **Dessart, Herman
Rue Alphonse Renard, 27
B-1060 Bruxelles (BE)**

(74) Mandataire : **Anthoine, Paul et al
SOLVAY & Cie Département de la Propriété
Industrielle 310, rue de Ransbeek
B-1120 Bruxelles (BE)**

## Description

L'invention concerne un procédé pour la neutralisation d'une nappe d'eau acide sur un sédiment comprenant une substance humique, telle qu'un lac, un étang ou un cours d'eau.

L'acidification de l'eau des lacs et des cours d'eau est préjudiciable à la vie aquatique, car elle modifie fondamentalement le biotope. Elle est souvent le résultat de l'activité humaine, telle que les pluies acides et certaines eaux résiduaires acides, mais elle peut aussi avoir une origine naturelle, telle que les eaux d'infiltration à travers des terrains acides.

Un moyen habituel de restaurer le biotope des lacs ou des cours d'eau acides consiste à neutraliser l'acidité de l'eau au moyen d'un réactif basique tel que de l'hydroxyde de sodium ou du carbonate de sodium que l'on épand à la surface de l'eau (OPD – The Chemical Marketing Newspaper – April 5, 1971 – pages 5 et 41 : "Soda Ash Helps Sweeten Up the Susquehanna River"). Une particularité désavantageuse de ce procédé connu est que son action est de courte durée et qu'il doit dès lors être répété fréquemment.

Pour remédier à ce désavantage, on a aussi proposé d'exploiter la propriété que possèdent les substances humiques présentes dans les sédiments des lacs, de se comporter comme des échangeurs cationiques en fixant les protons. A cet effet, on a songé à injecter périodiquement une solution aqueuse de carbonate de sodium in situ dans le sédiment, dans le but de régénérer l'échangeur cationique (Hydrobiologia – vol. 92 (1982) – Dr. W. Junk Publishers (The Hague) – G.K. Lindmark : "Acidified lakes : sediment treatment with sodium carbonate – a remedy ?" – pages 537 à 547). Ce procédé connu implique toutefois un appareillage compliqué et coûteux et sa mise en oeuvre est difficile, voire impossible, pour le traitement des lacs de grande profondeur. Par ailleurs, son action est lente, car la neutralisation des protons n'est effective qu'au contact de la substance humique du sédiment.

L'invention vise à remédier à ces désavantages des procédés connus en fournissant un procédé nouveau qui réalise, de manière aisée et économique, une neutralisation rapide, efficace et durable de l'eau des lacs et des cours d'eau acides.

L'invention concerne dès lors un procédé pour la neutralisation d'une nappe d'eau acide sur un sédiment comprenant une substance humique, selon lequel on introduit un composé du sodium dans la nappe d'eau ; selon l'invention, le composé du sodium est mis en oeuvre à l'état de blocs que l'on fait chuter dans la nappe d'eau et pénétrer au moins partiellement dans le sédiment.

Dans le procédé selon l'invention, le composé du sodium doit être solide à la température de la nappe d'eau et au moins partiellement soluble dans celle-ci. Il peut être de l'hydroxyde de sodium ou un sel dérivé d'un acide autre qu'un hydracide. On recommande les sels dérivés d'acides faibles tels que ceux qui, en solution aqueuse normale, présentent une valeur de pH supérieure à 2. Les sels dérivés d'acides inorganiques sont préférés, spécialement le carbonate de sodium, le bicarbonate de sodium et le sesquicarbonate de sodium. Le carbonate de sodium a la préférence.

Les blocs du composé du sodium peuvent être introduits dans la nappe d'eau par tous moyens appropriés. Par exemple, dans le cas d'un lac, d'un étang ou d'un cours d'eau, on peut les déverser en vrac dans l'eau, depuis la berge ou un bateau. Il convient d'assurer une répartition la plus homogène possible des blocs dans la couche de sédiment.

Selon l'invention, les blocs agissent en deux phases pour neutraliser l'acidité de la nappe d'eau. Dans une première phase, les blocs se dissolvent progressivement dans la nappe d'eau pendant la chute, et le composé du sodium dissous neutralise localement, in situ, l'acidité de l'eau. Dans la seconde phase, la partie des blocs qui pénètre dans le sédiment et s'y trouve enfouie, se dissout progressivement dans l'eau d'imprégnation du sédiment et la solution résultante réagit avec la substance humique acide pour convertir celle-ci en une substance humique sodique, selon la réaction d'échange de cations (dans le cas où le composé du sodium est du carbonate de sodium) :

$$2\,R\text{-}H + 2\,Na^+ + CO_3^- \rightarrow 2\,R\text{-}Na + H_2O + CO_2$$

dans laquelle R-H représente la substance humique acide et R-Na la substance humique sodique.

La substance humique sodique peut dès lors participer à la neutralisation de l'acidité de la nappe d'eau, par échange ionique :

$$R\text{-}Na + H^+ \rightarrow R\text{-}H + Na^+$$

L'importance respective de chacune de ces deux phases de neutralisation dépend de la fraction relative des blocs qui est dissoute pendant leur chute dans la nappe d'eau et de la fraction des blocs qui pénètre dans le sédiment. Elle dépend dès lors de divers paramètres tels que la profondeur de la nappe d'eau, la teneur du sédiment en substance humique, l'acidité et la vitesse d'acidification de l'eau, le composé du sodium mis en oeuvre, ainsi que la forme, le volume et la masse des blocs. D'une manière générale, on peut par exemple choisir la masse et les dimensions des blocs en fonction du composé du sodium utilisé, pour qu'au moins 30% de leur masse atteignent, à l'état solide, le sédiment. Il convient toutefois qu'une fraction suffisante de la masse des blocs se dissolve dans la nappe d'eau avant d'atteindre le sédiment, afin de ne pas ralentir exagérément le processus de neutralisation. La fraction optimum dépend de l'acidité du lac et elle doit dès lors être recherchée dans chaque cas particulier. Elle peut par exemple être égale ou supérieure à 1%, les valeurs au moins égales à 2% étant préférées. En pratique, les blocs préférés sont ceux pour lesquels la fraction de la masse qui atteint, à l'état solide, le sédiment est comprise entre 40 et 98%, de préférence 50 et 95%. Dans le cas de nappes d'eau très profondes ou encombrées de végétations telles que des algues, on peut éventuellement lester les blocs pour accélérer leur chute dans la nappe d'eau. Dans le cas de nappes d'eau très acides, il peut s'avérer souhaitable d'adapter le procédé pour qu'au moins 5% et, de préférence, plus de 10% de la masse des blocs se dissolvent dans la nappe d'eau, avant que les blocs n'atteignent le sédiment.

Toutes autres choses égales, on augmente l'efficacité de la régénération de l'échangeur cationique (constitué par la substance humique du sédiment) si on augmente le taux de pénétration des blocs dans le sédiment. Ce taux de pénétration dépend de divers paramètres, notamment la masse et la forme des blocs, la profondeur de la nappe d'eau et la stabilité mécanique du sédiment. Il convient toutefois que la partie des blocs, qui est enfouie dans le sédiment s'y trouve en contact avec suffisamment d'eau pour s'y dissoudre progressivement. On peut par exemple faciliter la pénétration des blocs dans le sédiment en les lestant ou en leur conférant un profil approprié, par exemple pyramidal ou conique ou en les larguant à partir d'un avion ou d'un hélicoptère.

Les blocs mis en oeuvre dans le procédé selon l'invention peuvent être des blocs monolithiques. On préfère toutefois, selon une forme de réalisation particulière de l'invention, mettre en oeuvre des agglomérés de particules, tels que les briquettes ovoïdes de carbonate de sodium commercialisées par Solvay & Cie pour la désulfuration de la fonte dans l'industrie sidérurgique (brochure Tr 592a-B-0,5-277 – Solvay & Cie). Cette forme de réalisation de l'invention se prête bien à une adaptation de la vitesse de dissolution des blocs dans la nappe d'eau et à leur taux de pénétration dans le sédiment, en fonction des caractéristiques de la nappe d'eau à traiter. Ces propriétés des blocs peuvent en effet être adaptées par un choix approprié de la pression de compactage des agglomérés ou par l'incorporation d'une matière de lestage ou d'un liant approprié. Le cas échéant, il convient évidemment de sélectionner une matière de lestage ou un liant qui n'exerce pas d'action nocive sur la flore ou la faune aquatique. On peut notamment faire usage d'agglomérés de carbonate de sodium comprenant du ciment Portland, de l'hydroxyde de sodium, des cendres volantes, des oxydes métalliques inoffensifs pour le milieu aquatique (notamment des oxydes de fer), de la silice ou du silicate de sodium. Des blocs préférés sont des agglomérés comprenant entre 95 et 98% en poids de carbonate de sodium et entre 2 et 5% en poids de silicate de sodium. Ces blocs préférés peuvent être obtenus par tous moyens connus ; une technique recommandée est celle qui consiste à compacter des particules de carbonate de sodium en présence d'une solution aqueuse de silicate de sodium.

Le procédé selon l'invention s'applique à toutes les nappes d'eau reposant sur un sédiment meuble comprenant une substance humique, notamment aux lacs naturels ou artificiels contenant ou ayant contenu une flore ou une faune aquatique et contaminés par des apports acides tels que des pluies acides, des eaux souterraines ou de ruissellement acides ou des décharges acides d'origine industrielle ou municipale.

Les exemples dont la description va suivre servent à illustrer l'invention. Ils se réfèrent aux figures 1 à 4 des dessins annexés.

La figure 1 est une diagramme reproduisant l'évolution, en fonction du temps, du pH de l'eau d'un lac traité conformément à une première forme d'exécution du procédé selon l'invention ;

La figure 2 est un diagramme reproduisant l'évolution, en fonction du temps, de la quantité de sodium se dissolvant dans l'eau du lac traité selon la première forme d'exécution du procédé selon l'invention.

Les figures 3 et 4 sont des diagrammes analogues aux diagrammes des figures 1 et 2 respectivement, dans le cas où le lac est traité selon une seconde forme d'exécution du procédé selon l'invention.

Les exemples dont la description suit concernent des essais de laboratoire qui ont été effectués sur le lac SĀNNEN en Suède.

On a prélevé trois échantillons de sédiment et d'eau dans trois zones correspondant à différentes profondeurs du lac. Au tableau I, on a mentionné, pour chaque échantillon :

– la profondeur du lac, dans la zone de prélèvement de l'échantillon,

– la perte au feu du sédiment, qui est une mesure de sa teneur en matières organiques.

Tableau I

| ECHANTILLON N° | PROFONDEUR DU LAC (m) | PERTE AU FEU (% en poids) |
|---|---|---|
| 1 | 0,40 | 1 |
| 2 | 5 | 22,4 |
| 3 | 10 | 26,9 |

Les trois échantillons ont été répartis en plusieurs éprouvettes. Pour chaque éprouvette, on a utilisé un tube de verre de 50 cm de haut et 11 cm de diamètre, dans lequel on a disposé une couche de sédiment de 20 cm, surmontée d'une couche d'eau du lac de 28 cm.

Après avoir maintenu les tubes au repos pendant 48 heures environ, on a disposé un bloc de carbonate de sodium à la surface du sédiment et on a mesuré l'évolution, au cours du temps, du pH de l'eau et du poids de sodium passé en solution. La température de l'échantillon dans l'éprouvette a été, dans chaque cas, de 8°C environ.

Première série d'essais

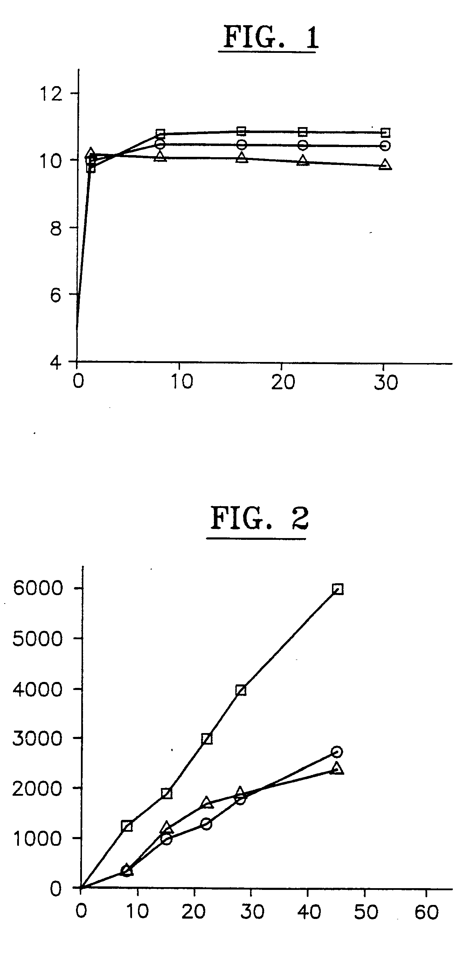

Dans les exemples 1 à 3, on a mis en oeuvre des blocs agglomérés de 40 g de carbonate de sodium tel quel et des éprouvettes correspondant aux trois échantillons 1, 2 et 3 définis plus haut.
Exemple 1 : échantillon n° 1.
Exemple 2 : échantillon n° 2.
Exemple 3 : échantillon n° 3.
Les résultats des mesures sont reportés sur les diagrammes des figures 1 et 2. Sur celles-ci, on a reporté, en abscisses, la durée de l'essai (exprimée en jours) et, en ordonnées, la valeur du pH (figure 1) et le poids (en mg) de sodium dissous dans l'eau de l'éprouvette (figure 2). Dans ces figures,
  – le symbole (□ ) concerne l'exemple 1,
  – le symbole (○ ) converne l'exemple 2,
  – le symbole (Δ) concerne l'exemple 3.

Seconde série d'essais

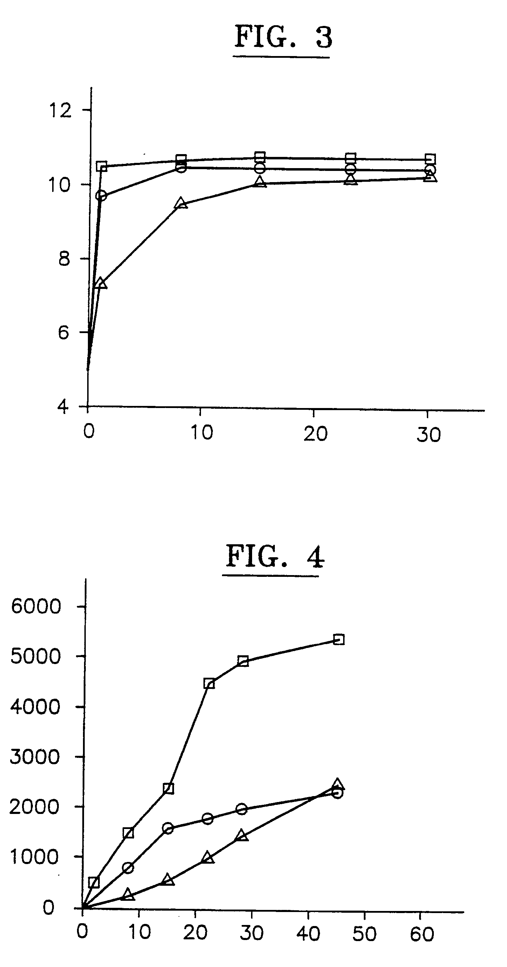

Dans les exemples 4 à 6, on a mis en oeuvre des blocs de 50 g, constitués d'environ 46 g de carbonate de sodium lié avec du silicate de sodium. Les essais ont également porté sur des éprouvettes correspondant aux trois échantillons 1, 2, 3 définis plus haut.
Exemple 4 : échantillon n° 1.
Exemple 5 : échantillon n° 2.
Exemple 6 : échantillon n° 3.
Les résultats des mesures sont reportés sur les diagrammes des figures 3 et 4 dont les échelles des abscisses et des ordonnées sont identiques respectivement à celles des figures 1 et 2. Par ailleurs,
  – le symbole (□ ) concerne l'exemple 4,
  – le symbole (○ ) concerne l'exemple 5,
  – le symbole (Δ) concerne l'exemple 5.
Les figures 1 à 4 montrent que la croissance du pH et du poids de sodium de l'eau est d'autant plus lente que le sédiment est riche en matières organiques. Ceci confirme qu'une fraction des blocs de carbonate de sodium a été consommée dans un processus de régénération de la capacité d'échange ionique de la matière humique du sédiment.

**Revendications**

1. Procédé pour la neutralisation d'une nappe d'eau acide sur un sédiment comprenant une substance humique, selon lequel on introduit un composé du sodium dans la nappe d'eau, caractérisé en ce que le composé du sodium est mis en oeuvre à l'état de blocs que l'on fait chuter dans la nappe d'eau et pénétrer au moins partiellement dans le sédiment.

2. Procédé selon la revendication 1, caractérisé en ce que le composé du sodium est un sel dérivé d'un acide faible.

3. Procédé selon la revendication 2, caractérisé en ce que le composé du sodium est sélectionné parmi le carbonate, le bicarbonate et le sesquicarbonate de sodium.

4. Procédé selon l'une quelconque des revendications 1 à 3, caractérisé en ce qu'on met en oeuvre des blocs de masse et de dimensions réglées pour qu'au moins 1% de leur masse se dissolvent dans l'eau pendant leur chute dans la nappe d'eau et qu'au moins 30% de leur masse atteignent, à l'état solide, le sédiment.

5. Procédé selon la revendication 4, caractérisé en ce qu'on choisit la masse et les dimensions des blocs pour que la fraction de leur masse, qui atteint à l'état solide le sédiment, soit comprise entre 50 et 95%.

6. Procédé selon l'une quelconque des revendications 1 à 5, caractérisé en ce qu'on déverse les blocs dans la nappe d'eau.

7. Procédé selon l'une quelconque des revendications 1 à 6, caractérisé en ce que les blocs sont des agglomérés de carbonate de sodium.

8. Procédé selon la revendication 7, caractérisé en ce que les agglomérés de carbonate de sodium comprennent un liant et/ou une matière de lestage.

9. Procédé selon la revendication 8, caractérisé en ce qu'on met en oeuvre des agglomérés comprenant entre 95 et 98% en poids de carbonate de sodium et entre 2 et 5% en poids de silicate de sodium.

10. Procédé selon l'une quelconque des revendications 1 à 9, caractérisé en ce qu'on met en oeuvre des blocs ovoïdes.

## Claims

1. Process for the neutralization of a layer of acidic water over a sediment comprising a humic substance, according to which a sodium compound is introduced into the water layer, characterized in that the sodium compound is used in the form of blocks which are made to fall into the water layer and to enter the sediment at least partially.

2. Process according to Claim 1, characterized in that the sodium compound is a salt derived from a weak acid.

3. Process according to Claim 2, characterized in that the sodium compound is chosen from sodium carbonate, bicarbonate and sesquicarbonate.

4. Process according to any one of Claims 1 to 3, characterized in that use is made of blocks whose mass and dimensions are adjusted so that at least 1% of their mass dissolves in the water during their fall in the water layer and that at least 30% of their mass reaches the sediment in solid form.

5. Process according to Claim 4, characterized in that the mass and the dimensions of the blocks are chosen so that the proportion of their mass reaching the sediment in solid form is between 50 and 95%.

6. Process according to any one of Claims 1 to 5, characterized in that the blocks are tipped into the layer of water.

7. Process according to any one of Claims 1 to 6, characterized in that the blocks are agglomerates of sodium carbonate.

8. Process according to Claim 7, characterized in that the agglomerates of sodium carbonate comprise a binder and/or a ballasting material.

9. Process according to Claim 8, characterized in that agglomerates comprising between 95 and 98% by weight of sodium carbonate and between 2 and 5% by weight of sodium silicate are employed.

10. Process according to any one of Claims 1 to 9, characterized in that ovoid blocks are employed.

## Ansprüche

1. Verfahren zur Neutralisation einer sauren Wasserfläche auf einem eine huminhaltige Substanz enthaltenden Sediment, gemäß dem man in die Wasserfläche eine Natriumverbindung zusetzt, dadurch gekennzeichnet, daß die Natriumverbindung in Form von Blöcken, die man in die Wasserfläche fallen und wenigstens teilweise in das Sediment eindringen läßt, eingesetzt wird.

2. Verfahren nach Anspruch 1, dadurch gekennzeichnet, daß die Natriumverbindung ein aus einer schwachen Säure abgeleitetes Salz ist.

3. Verfahren nach Anspruch 2, dadurch gekennzeichnet, daß die Natriumverbindung ausgewählt ist unter Natriumcarbonat, -bicarbonat und -sesquicarbonat.

4. Verfahren nach einem der Ansprüche 1 bis 3, dadurch gekennzeichnet, daß man Blöcke bestimmter Masse und Dimensionen einsetzt, daß sich während des Fallens in die Wasserfläche wenigstens 1% ihrer Masse im Wasser auflöst und daß wenigstens 30% ihrer Masse das Sediment in festem Zustand erreichen.

5. Verfahren nach Anspruch 4, dadurch gekennzeichnet, daß man die Masse und Dimensionen der Blöcke so wählt, daß der Teil ihrer Masse, der in festem Zustand das Sediment erreicht, zwischen 50 und 95% liegt.

6. Verfahren nach einem der Ansprüche 1 bis 5, dadurch gekennzeichnet, daß man die Blöcke in die Wasserfläche entleert.

7. Verfahren nach einem der Ansprüche 1 bis 6, dadurch gekennzeichnet, daß die Blöcke Natriumcarbonatagglomerate sind.

8. Verfahren nach Anspruch 7, dadurch gekennzeichnet, daß die Natriumcarbonatagglomerate ein Bindemittel und/oder ein Ballastmaterial enthalten.

9. Verfahren nach Anspruch 8, dadurch gekennzeichnet, daß man Agglomerate einsetzt, die zwischen 95 und 98 Gew.-% Natriumcarbonat und zwischen 2 und 5 Gew.-% Natriumsilikat umfassen.

10. Verfahren nach einem der Ansprüche 1 bis 9, dadurch gekennzeichnet, daß man ovale Blöcke einsetzt.

## FIG. 1

## FIG. 2

## FIG. 3

## FIG. 4